# EUROPÄISCHE PATENTANMELDUNG

(11) **EP 4 269 332 A1**
(43) Veröffentlichungstag der Anmeldung: **01.11.2023**
(21) Anmeldenummer: 22170094.1
(22) Anmeldetag: 26.04.2022
(51) Int. Cl.: C01B 3/02, C01B 3/38, C01B 3/56, C01C 1/04

(54) **VERFAHREN UND ANLAGE ZUR HERSTELLUNG VON AMMONIAK**

(71) Anmelder: GasConTec GmbH, 61348 Bad Homburg v. d. Höhe (DE)
(72) Erfinder: BALTHASAR, Wolff, 40883 Ratingen (DE); LAUER, Wolfgang, 34613 Schwalmstadt (DE); RAPPOLD, Dorit, 60437 Frankfurt (DE); WAGNER, Ulrich, 06406 Bernburg, OT Biendorf (DE)
(74) Vertreter: Patentanwälte Bauer Vorberg Kayser

(57) **Zusammenfassung**

Die Erfindung betrifft ein Verfahren zur Herstellung von Ammoniak (1), wobei ein kohlenstoffhaltiger Energieträgerstrom (2) und ein Sauerstoffstrom (3) aus einer Sauerstoffgewinnungsanordnung (4) einer Synthesegasreaktoranordnung (5) zum Gewinnen eines Synthesegasstroms (6) mit Wasserstoff und Kohlenstoffoxiden zugeführt wird, wobei der Synthesegasstrom (6) zumindest teilweise einer Adsorptionsvorrichtung (7) zum Trennen des Synthesegasstroms (6) in einen Wasserstoff aufweisenden Wasserstoffstrom (8) und in einen Kohlenstoffoxide aufweisenden Purgestrom (9) zugeführt wird und wobei der Wasserstoffstrom (8) zumindest teilweise sowie ein Stickstoffstrom (10) einer Ammoniak-Reaktoranordnung (11) zugeführt und dort in Ammoniak (1) umgewandelt wird. Das Verfahren ist dadurch gekennzeichnet, dass zumindest ein Teil der Kohlenstoffoxide in dem Purgestrom (9) der Synthesegasreaktoranordnung (5) zugeführt wird. Ebenso betrifft die Erfindung eine entsprechende Anlage zur Herstellung von Ammoniak (1).

## Beschreibung

Die Erfindung betrifft ein Verfahren zur Herstellung von Ammoniak mit den Merkmalen des Oberbegriffs von Anspruch 1 sowie eine Anlage zur Herstellung von Ammoniak mit den Merkmalen des Oberbegriffs von Anspruch 16.

Ammoniak ist ein Stoff, der zunehmend Bedeutung als Medium zum Transport von Wasserstoff gewinnt. Das liegt vor allem daran, dass er sich einfacher und vor allem energetisch günstiger als reiner Wasserstoff transportieren lässt und auch sehr einfach wieder in die Bestandteile Stickstoff und Wasserstoff aufgetrennt werden kann.

In diesem Zusammenhang besteht erhöhtes Interesse daran, Ammoniak auf eine Weise herzustellen, die einen sehr kleinen CO2-Fußabdruck aufweist. Man spricht im Falle eines sogenannten "low-low carbon footprint" dann auch von "blauem" Wasserstoff bzw. "blauem" Ammoniak.

Die Herstellung von Ammoniak geht von Wasserstoff sowie Stickstoff als Ausgangsstoffen aus, wobei speziell der Wasserstoff regelmäßig durch Synthesegas bereitgestellt wird, welches Synthesegas regelmäßig aus einem kohlenstoffhaltigen Energieträgerstrom wie z. B. Erdgas gewonnen wird. Wesentliche Vorgänge dabei, die zur Abgabe von Kohlenstoffdioxid führen, sind einerseits die Zerlegung der Umgebungsluft zum Gewinnen des Stickstoffs. Diese Zerlegung erfordert eine bestimmte Energie, die wiederum Grund für eine CO2-Emission in die Atmosphäre sein könnte.

Andererseits erfordert auch die Herstellung des Synthesegases Energie, wobei speziell beim Einsatz eines Steamreformers zu diesem Zweck bis zu 30 % des eingesetzten Erdgases zu seiner Unterfeuerung benötigt werden. Das dabei im Rauchgas enthaltene CO2 wird in die Atmosphäre abgegeben. Ansonsten im Prozess anfallendes CO2 kann mit einer Wäsche abgetrennt und genutzt werden, ohne dass es zu einer Abgabe in die Atmosphäre kommt.

Eine Verringerung der im Rauchgas emittierten Menge an CO2 entsprechend etwa 10 % des eingesetzten Erdgases lässt sich dadurch erreichen, dass anstelle eines Steamreforming ausschließlich eine autotherme Reformierung zur Erzeugung des Synthesegases eingesetzt wird. Ein solcher Ansatz ist beispielsweise in der EP 2 401 280 B1 offenbart, von welcher die vorliegende Erfindung als nächstkommend ausgeht. Bei der autothermen Reformierung ist keine externe Zufuhr von Hitze für die Erzeugung des Synthesegases erforderlich. Hinzu kommt, dass die ohnehin erforderliche Luftzerlegung auch gleich den Stickstoff für die Ammoniaksynthese bereitstellen kann.

Allerdings ist diese an sich bereits erhebliche Verringerung des CO2-Fußabdrucks noch nicht ausreichend für "blauen" Wasserstoff oder "blauen" Ammoniak. Weitergehende Möglichkeiten zur Verringerung des CO2-Fußabdrucks bestehen erstens darin, eine Rauchwäsche vorzusehen, was aber erhebliche Investitionen und abermals erhöhten Energiebedarf bedeutet. Zweitens wäre es auch möglich, ansonsten mit Erdgas betriebene Wärmetauscher elektrisch zu betreiben. Hierfür muss dann aber CO2-neutraler Strom in erheblicher Menge bereitgestellt werden und es verbleibt das Problem, wie mit ausgeschleustem Purgegas zu verfahren ist, welches normalerweise für den Betrieb der Wärmetauscher verfeuert wird. Ein solches Ausschleusen ist erforderlich um die ansonsten ansteigende Konzentration von Inertstoffen im Kreislauf zu vermeiden.

Ausgehend vom Stand der Technik besteht daher die Aufgabe der Erfindung darin, einen verbesserten Ansatz für die Herstellung von Ammoniak bereitzustellen, welcher einen sehr niedrigen CO2-Fußabdruck aufweist.

Bezogen auf ein Verfahren zur Herstellung von Ammoniak gemäß dem Oberbegriff von Anspruch 1 wird diese Aufgabe durch die Merkmale des kennzeichnenden Teils von Anspruch 1 gelöst. Bezogen auf eine Anlage zur Synthese von Ammoniak gemäß dem Oberbegriff von Anspruch 16 wird diese Aufgabe durch die Merkmale des kennzeichnenden Teils von Anspruch 16 gelöst.

Der Erfindung liegt die Erkenntnis zugrunde, dass zum weitgehenden Vermeiden von CO2-Emissionen bei der Ammoniaksynthese eine Rückführung des Purgestroms, welcher in der Wasserstoffabtrennung des Synthesegases anfällt, zum Synthesegasreaktor erfolgen kann. In dem Synthesegasreaktor kann in diesem Purgestrom enthaltenes Methan in Synthesegas umgewandelt werden, sodass keine Anreicherung von Methan im Kreislauf stattfindet. Vorrichtungen im Kreislauf wie eine CO2-Wäsche können CO2 aus dem Kreislauf entfernen, wobei etwa durch eine Shiftvorrichtung Kohlenstoffmonoxid in Kohlenstoffdioxid zwecks Auswaschen umgewandelt werden kann. Die Unterfeuerung der Wärmetauscher kann dann weit gehend durch Wasserstoff stattfinden, dessen Verbrennung ja kein CO2 entstehen lässt. Zur Vermeidung der Anreicherung von Inertstoffen kann ein kleiner Teil des Purgestroms weiterhin zur Unterfeuerung abgeführt werden, wobei die entsprechende Menge so gewählt werden kann, dass die Kriterien für "blauen" Wasserstoff oder "blauen" Ammoniak eingehalten werden.

Der Unteranspruch 3 beschreibt eine Ausgestaltung, welche neben der Vorrichtung zum Abtrennen des Wasserstoffs für die Ammoniaksynthese keine weitere Trennvorrichtung benötigt und damit konstruktiv besonders einfach umzusetzen ist.

Hingegen eine Variante mit einer Membranvorrichtung oder einer PSA zum Abtrennen von Wasserstoff aus dem Purgestrom der besagten Vorrichtung zum Abtrennen von Wasserstoff ist in den Unteransprüchen 4 bis 8 beschrieben. Diese Varianten erlauben eine besonders weit gehende Verringerung der CO2-Emissionen.

Eine effektive Rückgewinnung von CO2 aus dem Prozess ohne Abgabe in die Atmosphäre wird durch die in den Unteransprüchen 10 bis 13 beschrieben Kohlenstoffdioxidwäsche ermöglicht. Das auf diese Weise ausgewaschene CO2 kann verpresst oder anderweitig verwertet werden ohne dass es in die Atmosphäre freigesetzt wird.

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem ersten Ausführungsbeispiel,
- Fig. 2: schematisch das Fließbild einer vorschlagsgemäßen Anlage zur Ausführung des vorschlagsgemäßen Verfahrens gemäß einem zweiten Ausführungsbeispiel und
- Fig. 3: schematisch das Fließbild einer vorschlagsgemäßen Anlage zur Ausführung des vorschlagsgemäßen Verfahrens gemäß einem dritten Ausführungsbeispiel.

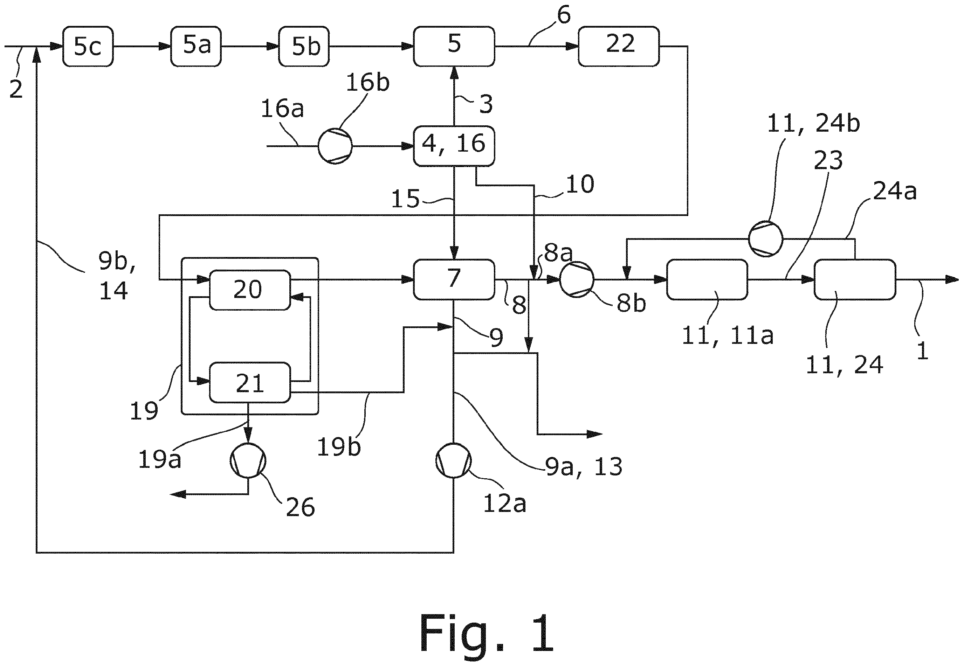

Das vorschlagsgemäße Verfahren dient der Herstellung von Ammoniak 1, wobei diese Herstellung durch Synthese in an sich aus dem Stand der Technik bekannter Weise erfolgt. Speziell wird ein erstes Ausführungsbeispiel des vorschlagsgemäßen Verfahrens durch die in der Fig. 1 dargestellte vorschlagsgemäße Anlage zur Herstellung von Ammoniak 1 ausgeführt und zunächst auch anhand der Anlage der Fig. 1 beschrieben.

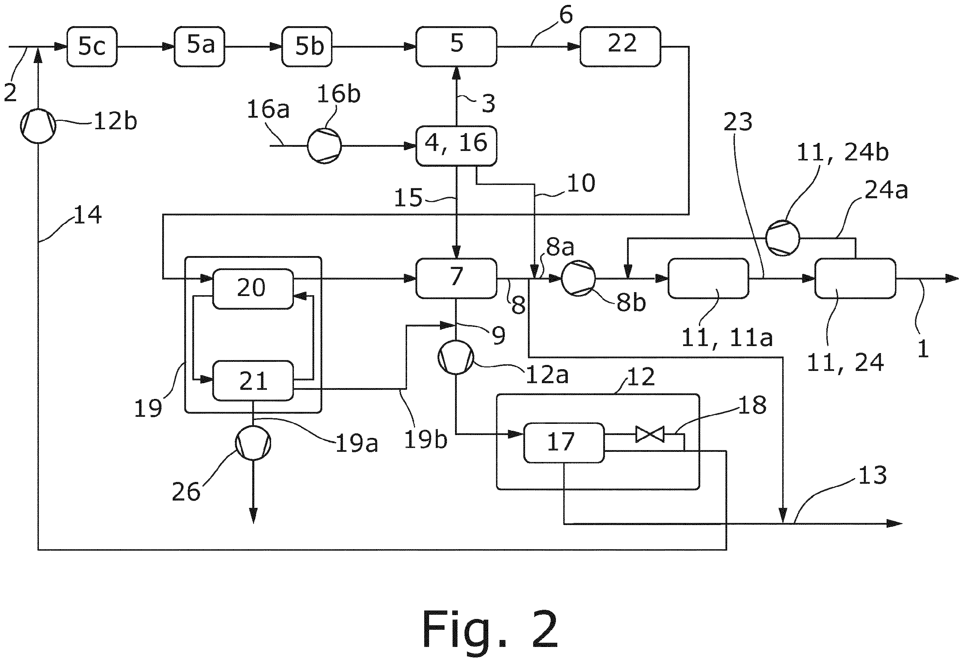

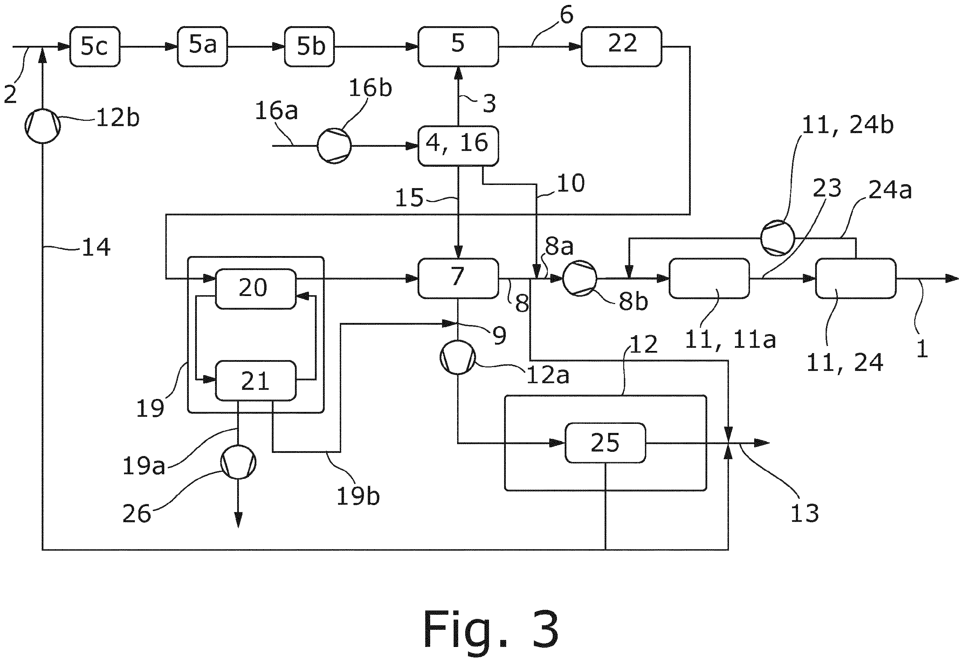

Zu den weiteren Ausführungsbeispielen des vorschlagsgemäßen Verfahrens und der vorschlagsgemäßen Anlage gemäß den Fig. 2 und 3 werden die Unterschiede zum Ausführungsbeispiel der Fig. 1 beschrieben. Soweit nichts Abweichendes festgestellt wird, entsprechend die Ausführungsbeispiele der Fig. 2 und 3 dem Ausführungsbeispiel der Fig. 1.

Die vorschlagsgemäße Anlage weist gemäß der Darstellung der Fig. 1 eine Sauerstoffgewinnungsanordnung 4 zum Bereitstellen eines Sauerstoffstroms 3, eine Synthesegasreaktoranordnung 5 zum Gewinnen eines Synthesegasstroms 6, welcher Wasserstoff und Kohlenstoffoxide aufweist, aus einem kohlenstoffhaltigen Energieträgerstrom 2 und dem Sauerstoffstrom 3 und eine Adsorptionsvorrichtung 7 zum Trennen zumindest eines Teils des Synthesegasstroms 6 in einen Wasserstoff aufweisenden Wasserstoffstrom 8 und in einen Kohlenstoffoxide aufweisenden Purgestrom 9 auf. Die vorschlagsgemäße Anlage weist ferner eine Ammoniak-Reaktoranordnung 11 zum Umwandeln zumindest eines Teils des Wasserstoffstroms 8 und eines Stickstoffstroms 10 in Ammoniak 1 auf. Die Kohlenstoffoxide bezeichnen Kohlenstoffmonoxid und Kohlenstoffdioxid.

Die vorschlagsgemäße Anlage ist dadurch gekennzeichnet, dass zumindest ein Teil der Kohlenstoffoxide in dem Purgestrom 9 der Synthesegasreaktoranordnung 5 zugeführt wird. Grundsätzlich kann diese Zuführung direkt erfolgen, sodass also etwa ein Teil des Purgestroms 9 abgezweigt und der Synthesegasreaktoranordnung 5 zugeführt wird. Es kann aber auch sein, wie untenstehend noch genauer beschrieben wird, dass die teilweise Zuführung der Kohlenstoffoxide in dem Purgestrom 9 zur Synthesegasreaktoranordnung 5 indirekt erfolgt.

Weiter ist die vorschlagsgemäße Anlage insbesondere dazu eingerichtet, das vorschlagsgemäße Verfahren auszuführen.

Entsprechend zu der vorschlagsgemäßen Anlage wird bei dem vorschlagsgemäßen Verfahren der kohlenstoffhaltige Energieträgerstrom 2 und der Sauerstoffstrom 3 aus der Sauerstoffgewinnungsanordnung 4 der Synthesegasreaktoranordnung 5 zugeführt. Bei dem kohlenstoffhaltigen Energieträgerstrom 2 kann es sich um einen Erdgasstrom umfassend Methan, Wasser, Stickstoff, Schwefelwasserstoff, Ethan, Propan und ggf. geringere Anteile von Butan handeln. Ebenso kann es sich um einen Strom von Erdölbegleitgas handeln. Bevorzugt ist, dass der molare Anteil von Stickstoff im Erdgasstrom zwischen 0,1 % und 1 % beträgt.

Der Sauerstoffstrom 3 umfasst Sauerstoff, vorzugweise zu einem molaren Anteil von mindestens 80 %, insbesondere von mindestens 98 %. Vor der Zuführung zur Synthesegasreaktoranordnung 5 kann auch eine Vorbehandlung des Energieträgerstroms 2 stattfinden, beispielsweise durch Zuführung zu einem - ebenfalls in der Fig. 1 dargestellten - Pre-Reformer 5a, einem Vorerwärmer 5b zur Erhitzung des Energieträgerstroms, einem Erdgaskompressor 5c zur Druckerhöhung des Energieträgerstroms 2 auf vorzugsweise mindestens 50 bar oder zu einer - hier nicht dargestellten - Entschwefelung. Diese Vorrichtungen sind vorzugsweise ebenfalls von der vorschlagsgemäßen Anlage umfasst.

Bei dem vorschlagsgemäßen Verfahren ist die Synthesegasreaktoranordnung 5 zum Gewinnen des Synthesegasstroms 6 mit Wasserstoff und Kohlenstoffoxiden eingerichtet. Dabei findet in der Synthesegasreaktoranordnung 5 eine Umwandlung der Kohlenwasserstoffe in Wasserstoff und Kohlenstoffoxide - also in Kohlenstoffmonoxid und Kohlenstoffdioxid - in an sich aus dem Stand der Technik bekannter Weise statt.

Weiter wird beim vorschlagsgemäßen Verfahren und entsprechend der Darstellung in der Fig. 1 der Synthesegasstrom 6 zumindest teilweise der Adsorptionsvorrichtung 7 zum Trennen des Synthesegasstroms 6 in den Wasserstoff aufweisenden Wasserstoffstrom 8 und in den Kohlenstoffoxide aufweisenden Purgestrom 9 zugeführt. Daneben kann der Purgestrom 9 auch Methan aufweisen. Das Methan in dem Purgestrom 9 rührt aus dem sogenannten "Methanslip" der Synthesegasreaktoranordnung 5. Es handelt sich um denjenigen Anteil von Methan in dem Energieträgerstrom 2, welcher in der Synthesegasreaktoranordnung 5 nicht in Wasserstoff und Kohlenstoffoxide umgewandelt wird sondern als Methan verbleibt und danach Bestandteil des Synthesegasstroms 6 wird. Ebenso können weitere Inertstoffe von dem Purgestrom 9 umfasst sein. Vorteilhaft bei dem Einsatz einer Adsorptionsvorrichtung und insbesondere bei dem Einsatz einer - unten noch näher beschriebenen - Druckwechsel-Adsorptionsvorrichtung ist, dass sie im Gegensatz zur Flüssigstickstoffwäsche auch dann verwendet werden kann, wenn der ihr zugeführte Strom einen höheren Anteil an CO2 aufweist.

Vor Zuführung zu der Adsorptionsvorrichtung 7 kann der Synthesegasstrom 6 auf verschiedene Art und Weise behandelt werden, was untenstehend ausführlicher beschrieben wird. Ebenso kann es sein, dass der Purgestrom 9 bis auf einen ggf. zugeführten, unten noch näher beschriebenen Spülstrom 15 im Wesentlichen aus den Bestandteilen des Synthesegasstroms 6 abzüglich des Wasserstoffstroms 8 besteht.

Beim vorschlagsgemäßen Verfahren wird der Wasserstoffstrom 8 zumindest teilweise sowie ein Stickstoffstrom 10 der Ammoniak-Reaktoranordnung 11 zugeführt und dort in Ammoniak 1 umgewandelt. Bezüglich des Stickstoffstroms 10 ist bevorzugt, dass dieser im Wesentlichen aus Stickstoff besteht. Bevorzugt ist weiter, dass gemäß der Darstellung in den Figuren der Wasserstoffstrom 8 zumindest teilweise mit dem Stickstoffstrom 10 zu einem Speisestrom 8a zusammengeführt wird und dieser Speisestrom 8a einem Speise-Kompressor 8b zum Verdichten des Speisestroms 8a zugeführt wird, bevor der Wasserstoffstrom 8 und der mit ihm zusammengeführte Stickstoffstrom 10 als Speisestrom 8a der Ammoniak-Reaktoranordnung 11 zugeführt werden. Vorzugsweise umfasst die vorschlagsgemäße Anlage den Speise-Kompressor 8b.

Das vorschlagsgemäße Verfahren ist dadurch gekennzeichnet, dass zumindest ein Teil der Kohlenstoffoxide in dem Purgestrom 9 der Synthesegasreaktoranordnung 5 zugeführt wird. Da diese Kohlenstoffoxide bereits mindestens einmal die Synthesegasreaktoranordnung 5 passierte, handelt es sich bei dieser Zuführung sogar um eine Rückführung zur Synthesegasreaktoranordnung 5.

Es ist bevorzugt, dass aus dem Purgestrom 9 ein Rückgewinnungsstrom 13 sowie ein Abgasstrom 14 gewonnen wird und dass der Abgasstrom 14 zumindest teilweise der Synthesegasreaktoranordnung 5 zugeführt wird. Vorzugsweise handelt es sich bei dem Rückgewinnungsstrom 13 um einen wasserstoffhaltigen Rückgewinnungsstrom 13. Weiter vorzugsweise weist der Abgasstrom 14 Kohlenstoffoxide auf. Bevorzugt ist hier, dass der Abgasstrom 14 - wie in den Fig. 1 bis 3 gezeigt - dem Erdgaskompressor 5c prozesstechnisch vorgelagert dem Energieträgerstrom 2 zugeführt. Es kann aber auch sein, dass der Abgasstrom 14 dem Energieträgerstrom 2 prozesstechnisch dem Erdgaskompressor 5c nachgelagert und insbesondere prozesstechnisch zwischen dem Erdgaskompressor 5c und dem Pre-Reformer 5a zugeführt wird. Ebenso kann es sein, dass der Abgasstrom 14 durch einen Abgasstromkompressor 12b druckerhöht wird, wie dies in den Fig. 2 und 3 dargestellt ist. Vorzugsweise ist dieser Abgasstromkompressor 12b von der Anlage umfasst.

Grundsätzlich können der Rückgewinnungsstrom 13 und der Abgasstrom 14 auch eine im Wesentlichen gleiche Zusammensetzung aufweisen.

Im Fall dass der Abgasstrom 14 Kohlenstoffoxide aufweist, kann der Abgasstrom 14 einen beliebigen Anteil von Kohlenstoffoxiden aufweisen, solange der Abgasstrom 14 überhaupt Kohlenstoffoxide enthält. Ebenso kann der Rückgewinnungsstrom 13, wenn es sich um einen wasserstoffhaltigen Rückgewinnungsstrom 13 handelt, grundsätzlich einen beliebigen Anteil von Wasserstoff aufweisen, ebenfalls solange der Rückgewinnungsstrom 13 überhaupt Wasserstoff enthält.

Weiter ist es bevorzugt, dass der Rückgewinnungsstrom 13 zur Unterfeuerung eines Wärmetauschers verwendet wird. Bei diesem Wärmetauscher kann es sich insbesondere um einen Wärmetauscher des Vorerwärmers 5b zur Erhitzung des Energieträgerstroms 2 handeln. Es kann auch sein, dass weitere Wärmetauscher durch den Rückgewinnungsstrom 13 unterfeuert werden. Ebenso kann es sein, dass der Rückgewinnungsstrom 13 nicht nur zur Unterfeuerung eines Wärmetauschers dient, sondern auch der Dampfüberhitzung für den Betrieb von einem oder mehreren Kompressoren der Anlage. Es ist also bevorzugt, dass der zweite Purge-Teilstrom 9b bzw. der Rückgewinnungsstrom 13 für die Dampfüberhitzung zum Betrieb von Kompressoren der Anlage verwendet wird. Insbesondere kann der Rückgewinnungsstrom 13 für die Dampfüberhitzung zum Betrieb eines Luftkompressors 16b der Luftzerlegungseinheit 16, Erdgaskompressors 5c, des Speise-Kompressors 8b, des Abgasstromkompressors 12b, des untenstehend beschriebenen Restgaskompressors 24b und/oder des ebenfalls untenstehend beschriebenen Rückgewinnungskompressors 12a oder des ebenfalls untenstehend beschriebenen CO2-Kompressors 26 verwendet werden.

Das beschriebene Gewinnen des Rückgewinnungsstroms 13 sowie des Abgasstroms 14 kann grundsätzlich auf beliebige Art und Weise erfolgen. Eine bevorzugte Variante entsprechend dem Ausführungsbeispiel der Fig. 1 sieht vor, dass der Purgestrom 9 in mindestens zwei Purge-Teilströme 9a, 9b aufgeteilt wird, dass ein erster Purge-Teilstrom 9a den Rückgewinnungsstrom 13 bildet und dass ein zweiter Purge-Teilstrom 9b den Abgasstrom 14 bildet. Erkennbar ist, dass das Kohlenstoffdioxid des ersten Purge-Teilstroms 9a in die Atmosphäre abgegeben wird, wohingegen das Kohlenstoffdioxid des zweiten Purge-Teilstroms 9b in dem Prozess verbleibt. Folglich kann durch eine Einstellung des Aufteilungsverhältnisses zwischen dem ersten Purge-Teilstrom 9a und dem zweiten Purge-Teilstrom 9b bestimmt werden, wieviel CO2 in die Atmosphäre emittiert wird. Bevorzugt ist, dass der Rückgewinnungsstrom 13 und der Abgasstrom 14 eine jeweilige Menge und eine jeweilige Zusammensetzung aufweisen, gemäß der mindestens 95 % und insbesondere mindestens 98 % des mit dem Energieträgerstroms 2, vorzugsweise mit dem Erdgasstrom, zugeführten Kohlenstoffs sequestriert oder mineralisiert werden. Sowohl der Sequestrierung als auch der Mineralisierung ist gemein, dass das betroffene Kohlenstoffdioxid nicht in die Atmosphäre abgegeben wird.

Im Gegensatz zu dem ersten Ausführungsbeispiel der Fig. 1 weist die jeweilige Anlage des zweiten Ausführungsbeispiels der Fig. 2 und des dritten Ausführungsbeispiels der Fig. 3 eine Rückgewinnungsanordnung 12 auf. Speziell ist hier bevorzugt, dass der Purgestrom 9 der Rückgewinnungsanordnung 12 zugeführt wird, welche Rückgewinnungsanordnung 12 aus dem Purgestrom 9 den Rückgewinnungsstrom 13 sowie den Abgasstrom 14 gewinnt. Es findet also nicht eine bloße Aufteilung des Purgestroms 9 statt, sondern die Rückgewinnungsanordnung 12 führt eine Trennung nach Stoffen durch. Entsprechend ist bevorzugt, dass der Rückgewinnungsstrom 13 einen höheren molaren Wasserstoffanteil als der Abgasstrom 14 aufweist. Ebenso kann es sein, dass der Abgasstrom 14 einen höheren molaren Anteil an Kohlenstoffoxiden als der Rückgewinnungsstrom 13 aufweist.

Das Gewinnen von solchen Strömen mit jeweils unterschiedlicher Zusammensetzung kann auf verschiedene Arten erfolgen. Gemäß dem Ausführungsbeispiel der Fig. 2 ist bevorzugt vorgesehen, dass die Rückgewinnungsanordnung 12 eine Membranvorrichtung 17 zum Abtrennen von Wasserstoff aus dem Purgestrom 9 aufweist. Insbesondere kann es sein, dass die Membranvorrichtung 17 den Rückgewinnungsstroms 13 aus dem Purgestrom 9 abtrennt, wodurch der Abgasstrom 14 verbleibt. Hier kann es weiter sein, dass ein Teil des Abgasstroms 14 als Membranspülstrom 18 zum Ausspülen des Rückgewinnungsstroms 13 verwendet wird.

Das Ausführungsbeispiel der Fig. 3 sieht eine weitere Möglichkeit vor, aus dem Purgestrom 9 Ströme mit unterschiedlicher Zusammensetzung zu erhalten. Speziell ist es bevorzugt, dass die Rückgewinnungsanordnung 12 eine Rückgewinnungs-Adsorptionsvorrichtung 25 zum Abtrennen von Wasserstoff aus dem Purgestrom 9 aufweist. Vorzugsweise trennt die Rückgewinnungs-Adsorptionsvorrichtung 25 den Rückgewinnungsstrom 13 aus dem Purgestrom 9 ab, wodurch der Abgasstrom 14 verbleibt. Vorzugsweise besteht der Rückgewinnungsstrom 13 im Wesentlichen aus Wasserstoff. Bei dieser Variante wird bevorzugt auch ein Teil des Abgasstroms 14 zur Unterfeuerung des Wärmetauschers oder der Wärmetauscher verwendet. Insbesondere kann - wie in der Fig. 3 dargestellt - ein Teil des Abgasstroms 14 zum Rückgewinnungsstrom 13 abgezweigt werden. Auf diese Weise wird die Anreicherung von Stickstoff im Kreislauf des Synthesegases vermieden.

Bezüglich der Rückgewinnungs-Adsorptionsvorrichtung 25 sind mehrere Varianten denkbar. Speziell kann es sein, dass die Rückgewinnungs-Adsorptionsvorrichtung 25 zur Druckwechsel-Adsorption und/oder zur Temperaturwechsel-Adsorption eingerichtet ist. Das Ausführungsbeispiel der Fig. 3 zeigt speziell eine Rückgewinnungs-Adsorptionsvorrichtung 25 zur Druckwechsel-Adsorption, also eine PSA.

Gemäß dem Ausführungsbeispielen der Fig. 2 und der Fig. 3 ist es bevorzugt, dass die Rückgewinnungsanordnung 12 einen Rückgewinnungskompressor 12a aufweist, welcher den Purgestrom 9 druckerhöht. Vorzugsweise wird der Purgestrom 9 vor Zuführung des Purgestroms 9 zur Rückgewinnungs-Adsorptionsvorrichtung 25 oder vor Zuführung des Purgestroms 9 zur Membranvorrichtung 17 druckerhöht.

Es kann sein, dass der Rückgewinnungsstrom 13 insgesamt zu wenig Wasserstoff aufweist, um zur Unterfeuerung der Wärmetauscher auszureichen. Für diesen Fall ist es bevorzugt, dass zumindest ein Teil des Wasserstoffstroms 8 zur Unterfeuerung eines Wärmetauschers oder von mehreren Wärmetauschern verwendet wird. Um dies zu erreichen kann - wie in den Figuren dargestellt - zumindest ein Teil des Wasserstoffstroms 8 dem Rückgewinnungsstrom 13 zugeführt werden. Bevorzugt ist, dass ein Teil des Wasserstoffstroms 8 zur Zuführung zum Rückgewinnungsstrom 13 prozesstechnisch der Zuführung des Stickstoffstroms 10 vorgelagert abgezweigt wird. Die Unterfeuerung durch Wasserstoff lässt Wasser anstelle von Kohlenstoffdioxid entstehen. Auf diese Weise kann ausreichend Energie für die Unterfeuerung der Wärmetauscher bereitgestellt werden ohne zusätzlich CO2 in die Umgebung abzugeben.

Es ist bevorzugt, dass der Synthesegasstrom 6 einer Kohlenstoffdioxidwäsche 19 zum Auswaschen mindestens eines Teiles des Kohlenstoffdioxids aus dem Synthesegasstrom 6 zugeführt wird. Vorzugsweise ist diese Kohlenstoffdioxidwäsche 19, welche ebenso als Vorrichtung zur Kohlenstoffdioxidwäsche bezeichnet werden kann, von der vorschlagsgemäßen Anlage umfasst. Grundsätzlich kann in dieser Kohlenstoffdioxidwäsche 19 auf beliebige Art und Weise mindestens ein Teil des Kohlenstoffdioxids aus dem Synthesegasstrom 6 ausgewaschen werden. Bevorzugt ist jedoch, dass in der Kohlenstoffdioxidwäsche 19 das Kohlenstoffdioxid durch ein Methanol umfassendes Waschmedium ausgewaschen wird. Ebenso ist es bevorzugt, dass das Kohlenstoffdioxid im Wesentlichen vollständig durch die Kohlenstoffdioxidwäsche 19 aus dem Synthesegasstrom 6 ausgewaschen wird. Vorzugsweise gibt die Kohlenstoffdioxidwäsche 19 einen kohlenstoffdioxidhaltigen Strom 19a ab und einen wasserstoffhaltigen Strom 19b ab. Dies wird untenstehend genauer beschrieben.

Hier ist es ebenso bevorzugt, dass der Synthesegasstrom 6 einer Absorptionsstufe 20 der Kohlenstoffdioxidwäsche 19 zur Aufnahme des Kohlenstoffdioxids in das Waschmedium zugeführt wird und dass das Waschmedium in der Absorptionsstufe 20 sowie in einer Regenerationsstufe 21 der Kohlenstoffdioxidwäsche 19 zum Freisetzen von Kohlenstoffdioxid aus dem Waschmedium in einem Kreislauf gefahren wird. Die Funktionsweise einer solchen Wäschervorrichtung ist an sich aus dem Stand der Technik bekannt.

Besonders vorteilhaft ist es, wenn das Waschmedium kaltes Methanol umfasst und auf diese Weise in einem sogenannten Kaltmethanol-Kreislauf geführt wird, was auch als "cold methanol loop" bezeichnet wird. Entsprechend ist es bevorzugt, dass eine Temperatur des Waschmediums in der Kohlenstoffdioxidwäsche 19 durchgehend weniger als -10 ° C beträgt. Dabei werden in der Regenerationsstufe 21 regelmäßig noch tiefere Temperaturen erreicht, so etwa zwischen -60° C und -80° C. Weiter kann es sein, dass die Temperatur des Waschmediums in der Kohlenstoffdioxidwäsche 19 durchgehend weniger als -20° C oder sogar weniger als -30° C beträgt. Die entsprechenden Druckverhältnisse des Waschmediums werden untenstehend beschrieben.

Bevorzugt ist hier vorgesehen, dass das Kohlenstoffdioxid aus dem Waschmedium in der Regenerationsstufe 21 im Wesentlichen durch Druckentspannung des Waschmediums freigesetzt wird. So kann der kohlenstoffdioxidhaltige Strom 19a gewonnen werden. Insbesondere ist es bevorzugt, dass das Kohlenstoffdioxid aus dem Waschmedium in der Regenerationsstufe 21 erhitzungsfrei freigesetzt wird. Auf diese Weise entfällt eine Erhitzung zwecks Regeneration, für welche Erhitzung üblicherweise ein aufwendiger separater Anlagenteil - als Heißregenerator bezeichnet - vorgesehen werden muss. Dies wiederum verringert den apparativen Aufwand und den Energiebedarf der Kohlenstoffdioxidwäsche 19, was kennzeichnend für den Ansatz des Kaltmethanol-Kreislaufs ist. Nach erfolgter erhitzungsfreier Freisetzung des Kohlenstoffdioxids aus dem Waschmedium kann demgegenüber durchaus eine Erwärmung des Kohlenstoffdioxids erfolgen, so etwa auf einen Temperaturbereich zwischen 0° C und 20° C durch einen Wärmeaustausch mit abzukühlendem heißen Synthesegas.

Vorteilhaft für den Einsatz einer solchen Regeneration praktisch ausschließlich durch Druckentspannung sind geringe Anforderungen an den zu erzielenden Restgehalt - molarer Anteil - an Kohlenstoffdioxid im der Adsorptionsvorrichtung 7 zugeführten Synthesegasstrom 6, welcher molare Anteil vorzugsweise im Bereich zwischen 0,2% und 3%, vorzugsweise zwischen 0,5% und 1% liegt. In den gezeigten Ausführungsbeispielen ist der Kohlenstoffdioxidwäsche 19 die Adsorptionsvorrichtung 7 zur Druckwechsel-Adsorption und damit zur Entfernung von Kohlenstoffoxiden, Methan und anderen Inerten nachgeschaltet, sodass das nach der Kohlenstoffdioxidwäsche 19 im Synthesegasstrom 6 verbleibende, restliche Kohlenstoffdioxid dort effektiv entfernt wird.

Eine solche Regeneration im Wesentlichen durch Druckentspannung ist insbesondere dann besonders gut möglich, wenn der Synthesegasstrom 6 mit einem möglichst hohen Druck durch die Kohlenstoffdioxidwäsche 19 geführt wird. Weiter ist es in diesem Zusammenhang bevorzugt, dass das Waschmedium bei der Kreislaufzufuhr von der Regenerationsstufe 21 zur Absorptionsstufe 20 auf einen höheren Druck gepumpt wird. Dies entspricht dem zur oben beschriebenen Druckentspannung entgegengesetzten Vorgang.

Die bei der Druckentspannung erfolgende drastische Abkühlung des Waschmediums ist ein gewünschter und kennzeichnender Effekt des Kaltmethanol-Kreislaufs. Sie führt dazu, dass das regenerierte und zurückgeführte Waschmedium das Kohlenstoffdioxid äußerst effizient wieder aufnehmen kann, so dass die Kohlendioxidwäsche 19 insgesamt sehr kompakt ausfallen und die benötigte Menge an Waschmedium sehr klein sein kann.

Bei einem Auswaschen von Kohlenstoffdioxid werden regelmäßig auch andere Bestandteile des gewaschenen Gasstroms, so etwa auch Wasserstoff, mit ausgewaschen. Die verschiedenen ausgewaschenen Gase werden aber bei der obigen Druckentspannung des Waschmediums hauptsächlich bei unterschiedlichen Druckentspannungsstufen freigesetzt. Dies ermöglicht es, dass die Kohlenstoffdioxidwäsche 19 - und speziell die Regenerationsstufe 21 - den kohlenstoffdioxidhaltigen Strom 19a sowie einen wasserstoffhaltigen Strom 19b abgibt. Folglich kann die Kohlenstoffdioxidwäsche 19 den wasserstoffhaltigen Strom 19b durch eine erste Druckentspannung des Waschmediums in der Regenerationsstufe 21 und den kohlenstoffdioxidhaltigen Strom 19a durch eine zweite Druckentspannung des Waschmediums in der Regenerationsstufe 21 abgeben. Bezüglich der Zusammensetzungen weist der kohlenstoffdioxidhaltige Strom 19a vorzugsweise einen höheren molaren Anteil an Kohlenstoffdioxid als der wasserstoffhaltige Strom 19b auf. Ebenso ist bevorzugt, dass der wasserstoffhaltige Strom 19b einen höheren molaren Anteil an Wasserstoff als der kohlenstoffdioxidhaltige Strom 19a auf. Sowohl der kohlenstoffdioxidhaltige Strom 19a als auch der wasserstoffhaltige Strom 19b können weitere Bestandteilt aufweisen.

Gemäß dem vorliegenden Ausführungsbeispiel weist der kohlenstoffdioxidhaltige Strom 19a einen Massenstrom von 305.372 kg / h bei einer Temperatur von 40 ° C und einem Druck von 1,5 bar sowie einen molaren Anteil von 99 % Kohlenstoffdioxid auf. Der wasserstoffhaltige Strom 19b hingegen, weist einen Massenstrom von 14.654 kg / h bei einer Temperatur von 45 ° C und einem Druck von 7 bar auf. Der wasserstoffhaltige Strom 19b weist ferner einen molaren Anteil von im Wesentlichen 60 % Kohlenstoffdioxid, 1 % Kohlenstoffmonoxid, 31 % Wasserstoff, 6 % Methan sowie 2 % Argon auf.

Bevorzugt ist, dass der wasserstoffhaltige Strom 19b zumindest teilweise und insbesondere im Wesentlichen vollständig dem Purgestrom 9 zugeführt wird. Vorzugsweise erfolgt diese Zuführung dem Rückgewinnungskompressor 12a prozesstechnisch vorgelagert, wie in den Fig. 2 und 3 dargestellt. Ebenso kann es sein, dass der wasserstoffhaltige Strom 19b zumindest teilweise für die Unterfeuerung von einem oder mehreren Wärmetauschern oder zur Dampfüberhitzung für den Betrieb von einem oder mehreren Kompressoren der Anlage verwendet wird. Zu diesem Zweck kann der wasserstoffhaltige Strom 19b zumindest teilweise dem Abgasstrom 14 zugeführt werden.

Bevorzugt ist weiter, dass der kohlenstoffdioxidhaltige Strom 19a sequestriert oder mineralisiert wird. Es wird also der kohlenstoffdioxidhaltige Strom 19a einer Lagerung oder Mineralisierung zugeführt, welche das Kohlenstoffdioxid des kohlenstoffdioxidhaltigen Stroms 19a von der Atmosphäre abschirmt oder chemisch umsetzt. Es kann weiter sein, dass der kohlenstoffdioxidhaltige Strom 19a - wie in den Fig. 1 bis 3 dargestellt - einem CO2-Kompressor 26 zugeführt wird, welcher den kohlenstoffdioxidhaltigen Strom 19a zur Sequestrierung oder Mineralisierung druckerhöht und welcher vorzugsweise von der Anlage umfasst ist. Weiter ist bevorzugt vorgesehen, dass ein Teil des Synthesegasstroms 6 der Kohlenstoffdioxidwäsche 19 prozesstechnisch nachgelagert abgezweigt und dem Purgestrom 9 zugeführt wird. Damit steht mehr Wasserstoff für die Unterfeuerung der Wärmetauscher oder die Dampfüberhitzung für den Betrieb der Kompressoren bereit.

Bevorzugt ist es ebenso, dass das Kohlenstoffdioxid mehrstufig aus dem Synthesegasstrom 6 in der Kohlenstoffdioxidwäsche 19 ausgewaschen wird. Dies ist gleichbedeutend damit, dass der Synthesegasstrom 6 mehrmals der Kohlenstoffdioxidwäsche 19 zugeführt wird.

Eine bevorzugte Ausführungsform ist dadurch gekennzeichnet, dass der Synthesegasstrom 6 einer Shiftvorrichtung 22 zugeführt wird, dass der der Shiftvorrichtung 22 zugeführte Synthesegasstrom 6 Wasser aufweist und dass in der Shiftvorrichtung 22 eine Wassergas-Shift-Reaktion zur Umsetzung zumindest eines überwiegenden Teils des Kohlenstoffmonoxids des Synthesegasstroms 6 mit dem Wasser in Kohlenstoffdioxid und Wasserstoff stattfindet. Das bedeutet, dass mindestens 50 % der Kohlenstoffmonoxidmoleküle im Synthesegasstrom 6 in Kohlenstoffdioxid und Wasserstoff umgesetzt werden. Es kann auch sein, dass mindestens 75 % der Kohlenstoffmonoxidmoleküle im Synthesegasstrom 6 in Kohlenstoffdioxid und Wasserstoff umgesetzt werden

Vorzugsweise ist die Shiftvorrichtung 22 von der vorschlagsgemäßen Anlage umfasst. Bevorzugt erfolgt diese Zuführung zur Shiftvorrichtung 22 der Kohlenstoffdioxidwäsche 19 prozesstechnisch vorgelagert entsprechend der Darstellung in den Figuren. Das Wasser im Synthesegasstrom 6 kann einerseits bereits im Energieträgerstrom 2 vorhanden sein. Es kann andererseits auch in einer - hier nicht dargestellten - Sättigung dem Synthesegasstrom 6 zugeführt werden. Für die Ammoniaksynthese ist aus dem Energieträgerstrom 2 nur Wasserstoff - neben dem ggf. vorhandenen Stickstoff - interessant, sodass die Kohlenstoffoxide im Synthesegasstrom 6 vorteilhafterweise möglichst weitgehend bereits vor Zuführung zur Adsorptionsvorrichtung 7 aus diesem entfernt werden können. Durch die in der Shiftvorrichtung 22 durchgeführte Wassergas-Shift-Reaktion wird einerseits zusätzlich wertvoller Wasserstoff gewonnen und anderseits Kohlenstoffdioxid auf Kosten von Kohlenstoffmonoxid gewonnen. Durch die Kombination mit der obigen Kohlenstoffdioxidwäsche 19 wird also zuerst in der Shiftvorrichtung 22 - unter dem Gewinn von Wasserstoff - die Zusammensetzung der Kohlenstoffoxide im Synthesegasstrom 6 zugunsten des Kohlenstoffdioxids gegenüber dem Kohlenstoffmonoxid verschoben und dann das Kohlenstoffdioxid im Wesentlichen vollständig ausgewaschen. Im Ergebnis weist der der Adsorptionsvorrichtung 7 zugeführte Synthesegasstrom 6 nur noch einen geringen Anteil an Kohlenstoffoxiden auf, sodass die Belastung der Adsorptionsvorrichtung 7 gering ausfällt. Neben der in den Figuren dargestellten Shiftvorrichtung 22 und der Kohlenstoffdioxidwäsche 19 kann der Synthesegasstrom 6 zwischen der Synthesegasreaktoranordnung 5 und der Adsorptionsvorrichtung 7 weitere, hier nicht gesondert dargestellte oder beschriebene Prozessstufen durchlaufen, und zwar insbesondere solche zur Änderung der Temperatur oder des Wasser- bzw. Wasserdampfgehalts.

In den Ausführungsbeispielen weist der der Shiftvorrichtung 22 zugeführte Synthesegasstrom 6 einen Massenstrom von 522.393 kg / h bei einer Temperatur von 320° Celsius und einem Druck von 71,5 bar auf. Der Synthesegasstrom 6 weist einen molaren Anteil von im Wesentlichen 6 % Kohlenstoffdioxid, 16 % Kohlenstoffmonoxid, 44 % Wasserstoff, 1 % Methan, 1 % Stickstoff und 32 % Wasser. Der aus der Shiftvorrichtung 22 gewonnene Synthesegasstrom 6 - welcher also der obigen Wassergas-Shift-Reaktion bereits unterzogen wurde - weist dann einen Massenstrom von 522.397 kg / h bei einer Temperatur von 355° C und einem Druck von 69 bar auf. Hinsichtlich seiner Zusammensetzung weist er einen molaren Anteil von nun im Wesentlichen 21 % Kohlenstoffdioxid, 1 % Kohlenstoffmonoxid, 58 % Wasserstoff, 2 % Methan, 1 % Stickstoff sowie 18 % Wasser auf. Der Anteil an Wasserstoff ist also erkennbar um 14 Prozentpunkte und damit mehr als 25 % Prozent angestiegen, wohingegen die Kohlenstoffoxide im Synthesegasstrom 6 nun fast ausschließlich aus Kohlenstoffdioxid bestehen.

Es ist bevorzugt, dass die Synthesegasreaktoranordnung 5 aus dem Energieträgerstrom 2 den Synthesegasstrom 6 durch eine autotherme Reformierung mit dem Sauerstoffstrom 3 gewinnt, sodass eine katalytische partielle Oxidation die für die endothermen Reformierungsreaktionen erforderliche Wärme bereitstellt. Es handelt sich dabei also um die an sich aus dem Stand der Technik bekannte autotherme Reformierung, welche auch als katalytische partielle Oxidation bezeichnet wird. Hier ist es weiter bevorzugt, dass der Synthesegasstrom 6 aus der Synthesegasreaktoranordnung 5 mit einem Austrittsdruck von mindestens 50 bar, vorzugsweise von 65 bar bis 75 bar austritt. Im vorliegenden Ausführungsbeispiel tritt der Synthesegasstrom 6 mit einem Druck von 72 bar und bei einer Temperatur von 1025° C aus der Synthesegasreaktoranordnung 5 aus. Dabei weist der Synthesegasstrom 6 einen Massenstrom von insgesamt 522.393 kg / h auf und jeweilige molare Anteile von im Wesentlichen 6 % Kohlenstoffdioxid, 16 % Kohlenstoffmonoxid, 44 % Wasserstoff, 1 % Methan, 32 % Wasser sowie weniger als 1 % Stickstoff auf. Dieser hohe Austrittsdruck wird durch einen ursprünglichen Druck des Energieträgerstroms 2 von mehr als 78 bar und der fehlenden Notwendigkeit ermöglicht, für eine - hier nicht erforderliche - Dampfreformierung den Druck zu verringern.

Durch diese autotherme Reformierung können also - insbesondere im Gegensatz zur herkömmlichen Dampfreformierung - höhere Drücke des Synthesegasstroms 6 erreicht werden, was eine geringere Kompressorleistung vor der Ammoniak-Reaktoranordnung 11 erlaubt. Ebenso von Vorteil ist, dass keine externe Energie zugeführt werden muss, sodass der Prozess der Synthesegasgewinnung keine CO2-Belastung darstellt.

Eine bevorzugte Ausführungsform ist dadurch gekennzeichnet, dass die Adsorptionsvorrichtung 7 eine Vielzahl von Behältern mit einem Adsorbens aufweist. Dabei können die Behälter jeweils abwechselnd in einem von mehreren Phasen betrieben werden. So ist es bevorzugt, dass die Adsorptionsvorrichtung 7 zur Druckwechsel-Adsorption eingerichtet ist und abwechselnd in mindestens einem der Vielzahl von Behältern in einer Adsorptionsphase bei höherem Druck der Synthesegasstrom 6 zum Gewinnen des Wasserstoffstroms 8 geführt wird und aus mindestens einem anderen der Vielzahl von Behältern in einer Spülphase bei niedrigerem Druck der Purgestrom 9 ausgelassen wird. Es handelt sich dabei um das an sich aus dem Stand der Technik bekannte Prinzip einer Druckwechsel-Adsorptionsvorrichtung (PSA). Mit anderen Worten werden zu einem beliebigen Zeitpunkt einige der Behälter der Adsorptionsvorrichtung 7 in der Adsorptionsphase betrieben, in welcher der Synthesegasstrom 6 der Adsorption unterzogen wird, während gleichzeitige andere Behälter der Adsorptionsvorrichtung 7 in der Spülphase von den adsorbierten Stoffen gereinigt werden. Indem die Behälter der Adsorptionsvorrichtung 7 in jeweils unterschiedlichen, abwechselnden Phasen betrieben werden, kann sowohl die Adsorption als auch das Spülen insgesamt kontinuierlich erfolgen. Dabei kann es auch weitere Phasen als die beschriebene Adsorptionsphase und Spülphase geben. Bevorzugt ist weiter, dass das Adsorbens ein Molekularsieb zum Trennen von Wasserstoff aufweist. Es kann weiter sein, dass der höhere Druck der Adsorptionsphase durch eine Komprimierung des Synthesegasstroms 6 in der Adsorptionsvorrichtung 7 erreicht wird. Im in der Fig. 1 dargestellten Ausführungsbeispiel gelangt der Synthesegasstrom 6 - einschließlich des Rückgewinnungsstroms 13 - bei einem Druck von im Wesentlichen 65,5 bar und mit einer Temperatur von 20° C zu der Adsorptionsvorrichtung 7 und weist bei einem Massenstrom von insgesamt 105.767 kg / h jeweilige molare Anteile von im Wesentlichen 3 % Kohlenstoffdioxid, 1 % Kohlenstoffmonoxid, 91 % Wasserstoff, 4 % Methan und 1 % Stickstoff auf. Erkennbar ist der Anteil des Wasserstoffs bereits vor Zuführung zur Adsorptionsvorrichtung 7 sehr hoch, was zu deren Entlastung führt. Der Wasserstoffstrom 8 aus der Adsorptionsvorrichtung 7 weist dann einen Massenstrom von insgesamt 41.175 kg / h bei 43° C auf und einem Druck von 64,9 bar und besteht im Wesentlichen vollständig aus Wasserstoff.

Eine weitere bevorzugte Ausführungsform jeweils des vorschlagsgemäßen Verfahrens und der vorschlagsgemäßen Anlage ist dadurch gekennzeichnet, dass die Adsorptionsvorrichtung 7 zur Temperaturwechsel-Adsorption eingerichtet ist und abwechselnd in mindestens einem der Vielzahl von Behältern in einer Adsorptionsphase bei niedrigerer Temperatur der Synthesegasstrom 6 zum Gewinnen des Wasserstoffstroms 8 geführt wird und aus mindestens einem anderen der Vielzahl von Behältern in einer Spülphase bei höherer Temperatur der Purgestrom 9 ausgelassen wird. Hier handelt es sich um das ebenfalls prinzipiell aus dem Stand der Technik bekannte Prinzip einer Temperaturwechsel-Adsorption (TSA). Diese Funktionsweise gemäß der Temperaturwechsel-Adsorption kann auch mit der oben beschriebenen Druckwechsel-Adsorption kombiniert werden. Hier kann es sein, dass die höhere Temperatur durch einen Wärmeaustausch mit einem wärmeren Fluid und/oder die niedrigere Temperatur durch einen Wärmeaustausch mit einen kälteren Fluid erreicht wird.

Eine bevorzugte Ausführungsform ist dadurch gekennzeichnet, dass zum Gewinnen des Purgestroms 9 ein stickstoffhaltiger, vorzugsweise im Wesentlichen aus Stickstoff bestehender, Spülstrom 15 der Adsorptionsvorrichtung 7 zugeführt wird. Gegenüber einem herkömmlichen, im Wesentlichen aus Wasserstoff bestehenden Spülstrom hat dies den Vorteil, dass die Verluste an Wasserstoff durch den Spülvorgang deutlich verringert werden. Hier kann es insbesondere sein, dass dem mindestens einem anderen der Vielzahl von Behältern in der Spülphase der Spülstrom 15 zum Ausspülen des Purgestroms 9 zugeführt wird. Während der größte Teil des eingesetzten Spülstroms 15 die Adsorptionsvorrichtung 7 mit dem Purgestrom 9 verlässt, verbleibt ein geringerer Teil nach dem Spülvorgang in der Adsorptionsvorrichtung 7 und verlässt sie mit dem Wasserstoffstrom 8. Mithin enthält der Wasserstoffstrom 8 einen geringen Anteil an Stickstoff, der aber für die nachgeschaltete Ammoniak-Reaktoranordnung 11 nicht störend ist und sondern sogar wünschenswert ist, da er den zuzusetzenden Stickstoffstrom 10 verringert.

Entsprechend ist es bezüglich des Wasserstoffstroms 8 bevorzugt, dass er einen molaren Anteil von mindestens 90 % Wasserstoff und vorzugsweise von mindestens 95 % Wasserstoff aufweist. Er kann auch einen molaren Anteil von mindestens 99 % Wasserstoff aufweisen. Ebenso kann es sein, dass der Wasserstoffstrom 8 im Wesentlichen aus Wasserstoff und aus vom Spülstrom 15 in der Adsorptionsvorrichtung 7 verbliebenem Stickstoff besteht. Alternativ kann es aber auch sein, dass der Wasserstoffstrom 8 im Wesentlichen aus Wasserstoff besteht.

Der Purgestrom 9 entspricht bei einem stickstoffhaltigen Spülstrom 15 in seiner Zusammensetzung dem um die Menge des im Wasserstoffstrom 8 verbleibenden Stickstoffs reduzierten Spülstrom 15 mit dem aus der Adsorptionsvorrichtung 7 ausgespülten Stoff, welcher Stoff wiederum im Wesentlichen dem Synthesegasstroms 6 abzüglich des Wasserstoffstroms 8 entspricht.

Grundsätzlich kann der Stickstoff dieses Spülstroms 15 einer beliebigen Quelle entstammen. Bevorzugt ist, dass der Spülstrom 15 aus einer Luftzerlegungseinheit 16 zum Gewinnen von Stickstoff und Sauerstoff aus einer Umgebungsluft 16a gewonnen und der Adsorptionsvorrichtung 7 zugeführt wird. Die Luftzerlegungseinheit weist bevorzugt einen Luftkompressor 16b zur Druckerhöhung der zugeführten Umgebungsluft auf. Vorzugsweise umfasst die vorschlagsgemäße Anlage diese Luftzerlegungseinheit 16. Eine solche Luftzerlegungseinheit 16 kann mehrere Stoffströme für das vorschlagsgemäße Verfahren und für die vorschlagsgemäße Anlage bereitstellen. So ist es weiter bevorzugt, dass der Stickstoffstrom 10 von der Luftzerlegungseinheit 16 bereitgestellt wird. In diesem Fall ist es bevorzugt, dass der Spülstrom 15 einen niedrigeren Druck als der Stickstoffstrom 10 aufweist. Ferner ist es bevorzugt, dass die Sauerstoffgewinnungsanordnung 4 die Luftzerlegungseinheit 16 umfasst oder aus ihr besteht. In diesem Fall wird auch der Sauerstoffstrom 3 von der Luftzerlegungseinheit 16 bereitgestellt.

Grundsätzlich kann die Luftzerlegungseinheit 16 mit Energie aus einer beliebigen Quelle betrieben werden. Um die gewünschte CO2-Bilanz zu erreichen, wird die Luftzerlegungseinheit 16 vorzugsweise mit in der Synthesegasreaktoranordnung 5 gewonnenem Dampf betrieben.

Gemäß einer bevorzugten Ausführungsform kann es sein, dass die Ammoniak-Reaktoranordnung 11 einen Reaktorstufe 11a für die Ammoniaksynthese sowie eine prozesstechnisch der Reaktorstufe 11a nachgelagerte Kondensationsstufe 24 zum Abtrennen von Ammoniak 1 aus Restgas 24a aufweist. Dann wird der in der Reaktorstufe 11 synthetisierte Ammoniak 1 zunächst als Rohammoniakstrom 23 aus der Reaktorstufe 11a geführt und der Kondensationsstufe 24 zugeführt, aus welcher das Ammoniak 1 durch Auskondensation gewonnen wird. Ein verbliebenes Restgas 24a wird nach Druckerhöhung durch einen Restgaskompressor 24b der Ammoniak-Reaktoranordnung 11 aus der Kondensationsstufe 24 zu der Reaktorstufe 11a rezykliert. Hier ist es weiter bevorzugt, dass eine Kühlung der Kondensationsstufe 24 mit der Kohlenstoffdioxidwäsche 19 zur Kühlung des Waschmediums auf eine in der Fig. 1 nicht dargestellte Art und Weise gekoppelt ist.

Vorstehend beschriebene bevorzugte Ausgestaltungen des vorschlagsgemäßen Verfahrens entsprechen bevorzugten Ausgestaltungen der vorschlagsgemäßen Anlage und umgekehrt.

## Patentansprüche

1. Verfahren zur Herstellung von Ammoniak (1), wobei ein kohlenstoffhaltiger Energieträgerstrom (2) und ein Sauerstoffstrom (3) aus einer Sauerstoffgewinnungsanordnung (4) einer Synthesegasreaktoranordnung (5) zum Gewinnen eines Synthesegasstroms (6) mit Wasserstoff und Kohlenstoffoxiden zugeführt wird, wobei der Synthesegasstrom (6) zumindest teilweise einer Adsorptionsvorrichtung (7) zum Trennen des Synthesegasstroms (6) in einen Wasserstoff aufweisenden Wasserstoffstrom (8) und in einen Kohlenstoffoxide aufweisenden Purgestrom (9) zugeführt wird und wobei der Wasserstoffstrom (8) zumindest teilweise sowie ein Stickstoffstrom (10) einer Ammoniak-Reaktoranordnung (11) zugeführt und dort in Ammoniak (1) umgewandelt wird, **dadurch gekennzeichnet, dass** zumindest ein Teil der Kohlenstoffoxide in dem Purgestrom (9) der Synthesegasreaktoranordnung (5) zugeführt wird.

2. Verfahren nach Anspruch 1, **dadurch gekennzeichnet, dass** aus dem Purgestrom (9) ein, vorzugsweise wasserstoffhaltiger, Rückgewinnungsstrom (13) sowie ein, insbesondere Kohlenstoffoxide aufweisender, Abgasstrom (14) gewonnen wird und dass der Abgasstrom (14) zumindest teilweise der Synthesegasreaktoranordnung (5) zugeführt wird, weiter vorzugsweise, dass der Rückgewinnungsstrom (13) zur Unterfeuerung eines Wärmetauschers verwendet wird.

3. Verfahren nach Anspruch 2, **dadurch gekennzeichnet, dass** der Purgestrom (9) in mindestens zwei Purge-Teilströme (9a, b) aufgeteilt wird, dass ein erster Purge-Teilstrom (9a) den Rückgewinnungsstrom (13) bildet und dass ein zweiter Purge-Teilstrom (9b) den Abgasstrom (14) bildet.

4. Verfahren nach Anspruch 2, **dadurch gekennzeichnet, dass** der Purgestrom (9) einer Rückgewinnungsanordnung (12) zugeführt wird, welche aus dem Purgestrom (9) den Rückgewinnungsstrom (13) sowie den Abgasstrom (14) gewinnt, vorzugsweise, dass der Rückgewinnungsstrom (13) einen höheren molaren Wasserstoffanteil als der Abgasstrom (14) aufweist, insbesondere, dass der Abgasstrom (14) einen höheren molaren Anteil an Kohlenstoffoxiden als der Rückgewinnungsstrom (13) aufweist.

5. Verfahren nach Anspruch 4, **dadurch gekennzeichnet, dass** die Rückgewinnungsanordnung (12) eine Membranvorrichtung (17) zum Abtrennen von Wasserstoff aus dem Purgestrom (9) aufweist, insbesondere, dass die Membranvorrichtung (17) den Rückgewinnungsstroms (13) aus dem Purgestrom (9) abtrennt, wodurch der Abgasstrom (14) verbleibt, vorzugsweise, dass ein Teil des Abgasstroms (14) als Membranspülstrom (18) zum Ausspülen des Rückgewinnungsstroms (13) verwendet wird.

6. Verfahren nach Anspruch 4 oder 5, **dadurch gekennzeichnet, dass** die Rückgewinnungsanordnung (12) eine Rückgewinnungs-Adsorptionsvorrichtung (25) zum Abtrennen von Wasserstoff aus dem Purgestrom (9) aufweist, insbesondere, dass die Rückgewinnungs-Adsorptionsvorrichtung (25) den Rückgewinnungsstrom (13) aus dem Purgestrom (9) abtrennt, wodurch der Abgasstrom (14) verbleibt.

7. Verfahren nach Anspruch 6, **dadurch gekennzeichnet, dass** die Rückgewinnungs-Adsorptionsvorrichtung (25) zur Druckwechsel-Adsorption und/oder zur Temperaturwechsel-Adsorption eingerichtet ist.

8. Verfahren nach einem der Ansprüche 4 bis 7, **dadurch gekennzeichnet, dass** die Rückgewinnungsanordnung (12) einen Rückgewinnungskompressor (12a) aufweist, welcher den Purgestrom (9) druckerhöht, vorzugsweise vor Zuführung des Purgestroms (9) zur Rückgewinnungs-Adsorptionsvorrichtung (25) oder vor Zuführung des Purgestroms (9) zur Membranvorrichtung (17) druckerhöht.

9. Verfahren nach einem der Ansprüche 1 bis 8, **dadurch gekennzeichnet, dass** zumindest ein Teil des Wasserstoffstroms (8) zur Unterfeuerung eines Wärmetauschers verwendet wird.

10. Verfahren nach einem der Ansprüche 1 bis 9, **dadurch gekennzeichnet, dass** der Synthesegasstrom (6) einer Kohlenstoffdioxidwäsche (19) zum Auswaschen mindestens eines Teiles des Kohlenstoffdioxids aus dem Synthesegasstrom (6) zugeführt wird, insbesondere, dass die Kohlenstoffdioxidwäsche einen kohlenstoffdioxidhaltigen Strom (19a) und einen wasserstoffhaltigen Strom (19b) abgibt, vorzugsweise, dass in der Kohlenstoffdioxidwäsche (19) das Kohlenstoffdioxid durch ein Methanol umfassendes Waschmedium ausgewaschen wird.

11. Verfahren nach Anspruch 10, **dadurch gekennzeichnet, dass** der wasserstoffhaltige Strom (19b) zumindest teilweise dem Purgestrom (9) zugeführt wird.

12. Verfahren nach Anspruch 10 oder 11, **dadurch gekennzeichnet, dass** ein Teil des Synthesegasstroms (6) der Kohlenstoffdioxidwäsche (19) prozesstechnisch nachgelagert abgezweigt und dem Purgestrom (9) zugeführt wird.

13. Verfahren nach einem der Ansprüche 9 oder 10, **dadurch gekennzeichnet, dass** das Kohlenstoffdioxid mehrstufig aus dem Synthesegasstrom (6) in der Kohlenstoffdioxidwäsche (19) ausgewaschen wird.

14. Verfahren nach einem der Ansprüche 1 bis 13, **dadurch gekennzeichnet, dass** die Synthesegasreaktoranordnung (5) aus dem Energieträgerstrom (2) den Synthesegasstrom (6) durch eine autotherme Reformierung mit dem Sauerstoffstrom (3) gewinnt, sodass eine katalytische partielle Oxidation die für die endothermen Reformierungsreaktionen erforderliche Wärme bereitstellt, vorzugsweise dass der Synthesegasstrom (6) aus der Synthesegasreaktoranordnung (5) mit einem Austrittsdruck von mindestens 50 bar, vorzugsweise von 65 bar bis 75 bar austritt.

15. Verfahren nach einem der Ansprüche 1 bis 14, **dadurch gekennzeichnet, dass** der Synthesegasstrom (6), vorzugsweise der Kohlenstoffdioxidwäsche (19) prozesstechnisch vorgelagert, einer Shiftvorrichtung (22) zugeführt wird, dass der der Shiftvorrichtung (22) zugeführte Synthesegasstrom (6) Wasser aufweist und dass in der Shiftvorrichtung (22) eine Wassergas-Shift-Reaktion zur Umsetzung zumindest eines überwiegenden Teils des Kohlenstoffmonoxids des Synthesegasstroms (6) mit dem Wasser in Kohlenstoffdioxid und Wasserstoff stattfindet.

16. Anlage zur Herstellung von Ammoniak (1) mit einer Sauerstoffgewinnungsanordnung (4) zum Bereitstellen eines Sauerstoffstroms (3), einer Synthesegasreaktoranordnung (5) zum Gewinnen eines Synthesegasstroms (6) mit Wasserstoff und Kohlenstoffoxiden aus einem kohlenstoffhaltigen Energieträgerstrom (2) und dem Sauerstoffstrom (3), einer Adsorptionsvorrichtung (7) zum Trennen zumindest eines Teils des Synthesegasstroms (6) in einen Wasserstoff aufweisenden Wasserstoffstrom (8) und in einen Kohlenstoffoxide aufweisenden Purgestrom (9) und einer Ammoniak-Reaktoranordnung (11) zum Umwandeln zumindest eines Teils des Wasserstoffstroms (8) und eines Stickstoffstroms (10) in Ammoniak (1), **dadurch gekennzeichnet, dass** zumindest ein Teil der Kohlenstoffoxide in dem Purgestrom (9) der Synthesegasreaktoranordnung (5) zugeführt wird.
